(19)

Europäisches
Patentamt
European
Patent Office
Office européen
des brevets

(11) **EP 1 975 841 A2**

(12) **EUROPEAN PATENT APPLICATION**

(43) Date of publication:
**01.10.2008 Bulletin 2008/40**

(51) Int Cl.:
***G06F 21/20*** *(2006.01)*

(21) Application number: **07124021.2**

(22) Date of filing: **21.12.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **09.03.2007 KR 20070023674**

(71) Applicant: **Samsung Electronics Co., Ltd.
Suwon-si, Gyeonggi-do 442-742 (KR)**

(72) Inventors:
• **Ju, Hak-soo
Gyeonggi-do (KR)**
• **Kim, Myung-sun
Gyeonggi-do (KR)**
• **Moon, Ji-young
Gyeonggi-do (KR)**

(74) Representative: **Rooney, John-Paul
Appleyard Lees
15 Clare Road
Halifax
HX1 2HY (GB)**

(54) **Method and system for mutual authentication between mobile and host devices**

(57) Provided are a method and a system for mutual authentication between mobile and host devices. The mobile device (100) stores a first secret key and is connected to the host device (200). The method includes generating a second secret key using the first secret key and first data that is received from the host device (200) and is encrypted using a predetermined method. The method further includes transmitting second data that is encrypted using a predetermined method, to the host device (200) to induce generation of a media key; performing an operation on the second secret key and transmitting a generated operation value to the host device (200); and performing mutual authentication between the mobile device (100) and the host device (200).

FIG. 4

**Description**

**BACKGROUND OF THE INVENTION**

**Field of the Invention**

Methods and apparatuses consistent with the present invention relate to contents protection, and to mutual authentication between mobile and host devices.

**Description of the Related Art**

Recently, transmission of contents using various communication mediums, such as the Internet, terrestrial waves, cables and satellites, is rapidly increasing, and the sale and lending of contents using large-capacity recording mediums such as compact discs (CDs) and digital versatile discs (DVDs) is also rapidly increasing. Accordingly, digital rights management (hereinafter, referred to as DRM), which is a solution for protecting copyrights, is emerging as an important issue. A study of broadcast encryption for encrypting contents to be broadcast over the Internet or stored on recording mediums such as CDs and DVDs, is briskly proceeding.

In other words, due to the combining of network and device contents and services, the distribution environment of digital media is enlarged. As a result, distribution of contents can be made through personal computers (PCs) via the Internet, and through home appliances and mobile devices through digital broadcasting and home networking.

In order to prevent the usage of illegally-distributed contents, methods for revoking access to illegally-distributed contents or contents keys of a device that has played back contents have been studied.

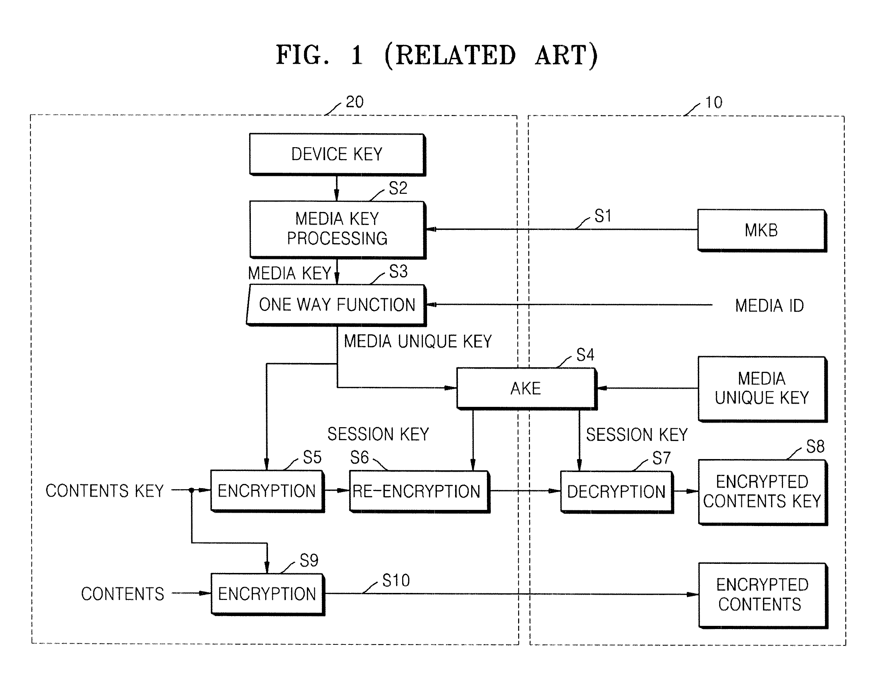

FIG. 1 illustrates a conventional system for mutual authentication between mobile and host devices. Referring to FIG. 1, a contents transmission system includes a mobile device 10 for storing a media key block (MKB) and a host device 20 for storing a device key for interpreting the MKB.

An MKB includes data that is transmitted to a host device. The MKB checks whether the host device has been reproduced by an unauthorized manufacturer. The MKB is encrypted using a broadcast method.

The host device 20 is a device that records or plays back contents to be transmitted, and the mobile device 20 is a device that includes a portable memory card and stores contents transmitted from the host device 20.

In a method of transmitting contents, stored in the host device 20, to the mobile device 10, first, the mobile device 10 transmits an MKB to the host device 20 (S1), as illustrated in FIG. 1. The host device 20 receives the MKB and generates a media key through media key processing (S2) using a stored device key. Using a one way function (S3), the host device 20 generates a media unique key from the media key and a media identifier (ID) that is received from the mobile device 10. The one way function includes a hash function and is a function in which an input value is not inferred from an output value.

If the media unique key is generated in this manner, the host device 20 and the mobile device 10 respectively generate a session key using authenticated key exchange (AKE) (S4).

At this time, a contents key, that is encrypted (S5) using the media unique key, is re-encrypted by the session key of the host device 20 (S6) and is transmitted to the mobile device 10. The mobile device 10 decrypts the contents key using the session key (S7) and generates an encrypted contents key (S8).

The host device 20 encrypts stored contents using the contents key (S9) and transmits the encrypted contents to the mobile device 10 (S10).

In order to prevent distribution from a host device for storing an illegally-copied or non-authenticated device key, a contents producer (CP) stores an updated MKB in the mobile device 10. In other words, it can be determined through the MKB whether the host device 20 is a valid host device or not, and a host device that has been reproduced by an unauthorized manufacturer is configured not to encrypt or decrypt a contents key or contents and to be revoked.

In other words, as a result of transmitting the updated MKB that is stored in the mobile device 10, to the host device 20, when the host device 20 is a device that has been reproduced by an unauthorized manufacturer, a media key processing process fails due to the unauthorized reproduction of the host device 20. Contrary to this, when the host device 20 is an authenticated device, the media key processing process is successfully performed using the host device 20.

Thus, the CP stores a new MKB in a host device and sells the MKB so that a host device that has been reproduced by an unauthorized manufacturer cannot generate a media key from a new MKB.

In this way, when the host device 20 stores a device key that has been reproduced by an unauthorized manufacturer, although the updated MKB is transmitted to the host device 20 from the mobile device 10, the host device 20 cannot generate a media key through a media key processing process, thereby revoking the host device 20.

Accordingly, in the related art, in case of a host device 20 that has been reproduced by an unauthorized manufacturer, the host device 20 can be revoked using the MKB of the mobile device 10. However, when the mobile device 10 has been reproduced by an unauthorized manufacturer, the mobile device0 cannot be revoked.

## SUMMARY OF THE INVENTION

According to the present invention there is provided an apparatus, method and system as set forth in the appended claims. Other features of the invention will be apparent from the dependent claims, and the description which follows.

The present invention provides a method for mutual authentication between mobile and host devices by which mutual authentication between the mobile and host devices cannot be performed by a mobile device that has been reproduced by an unauthorized manufacturer so that two way revocation of a mobile device and a host device can be performed.

According to an aspect of the present invention, there is provided an apparatus comprising: a processor generating a second secret key using a first secret key and first data that is received from a host device and is encrypted using a predetermined method; an MKB (media key block) storing second data that is transmitted to the host device, so as to induce generation of a media key and is encrypted using a predetermined method; and an interface transmitting and receiving information including the encrypted first data and the second data when the interface is connected to the host device, and performing mutual authentication with the host device.

The processor may transmit an operation value that is generated by performing an operation on a stored media ID and the second secret key, to the host device through the interface.

The apparatus may further include a key storage unit storing the storage key; a contents storage unit storing encrypted contents; and an encryption/decryption unit encrypting or decrypting the contents or a contents key.

The key storage unit may further store at least one of a first media unique key and a public key.

The host device may store the encrypted first data, so as to induce generation of the storage media key and may generate a second media unique key from the storage media key and the operation value.

The interface may receive the second media unique key and perform mutual authentication with the host device by using the first media unique key and the second media unique key as common information.

The interface may perform mutual authentication with the host device by exchanging a public key stored in the key storage unit and a public key stored in the host device.

The encryption/decryption unit may encrypt or decrypt the contents key using a session key that is generated through the mutual authentication.

The encrypted first and second data may be encrypted using a broadcast encryption method.

According to another aspect of the present invention, there is provided a method for mutual authentication between an apparatus and a host device when the apparatus which is storing a first secret key is connected to the host device, the method comprising: generating a second secret key using the first secret key and first data that is received from the host device and is encrypted using a predetermined method; transmitting second data that is encrypted using a predetermined method, to the host device to induce generation of a media key; performing an operation on the second secret key and transmitting a generated operation value to the host device; and performing mutual authentication with the host device.

The performing of mutual authentication with the host device may include performing mutual authentication by using a first media unique key and a second media unique key as common information.

The performing of mutual authentication with the host device may include performing mutual authentication by exchanging a public key stored in the key storage unit and a public key stored in the host device.

According to another aspect of the present invention, there is provided a system for mutual authentication between an apparatus and host device, the system comprising: an apparatus generating a stored first secret key and a second secret key using first data that is received and is encrypted using a predetermined method and outputting an operation value that is generated by performing an operation on the second secret key; and a host device transmitting the first data to the device, receiving second data that is encrypted using a predetermined method, from the device and generating a media key from the second data.

## BRIEF DESCRIPTION OF THE DRAWINGS

The above and other aspects and advantages of the present invention will become more apparent by describing in detail exemplary embodiments thereof with reference to the attached drawings in which:

FIG. illustrates a related art system for mutual authentication between mobile and host devices;

FIG. 2 illustrates the configuration of a mobile device according to an exemplary embodiment of the present invention;

FIG. 3 illustrates the configuration of a host device according to an exemplary embodiment of the present invention;

FIG. 4 illustrates a system for mutual authentication between mobile and host devices according to an exemplary embodiment of the present invention;

FIG. 5 illustrates a system for mutual authentication between mobile and host devices according to another exemplary embodiment of the present invention; and

FIG. 6 illustrates a system for mutual authentication between mobile and host devices according to another exemplary embodiment of the present invention.

## DETAILED DESCRIPTION OF EXEMPLARY EMBODIMENTS OF THE INVENTION

The present invention will now be described more fully with reference to the accompanying drawings, in which exemplary embodiments of the invention are shown.

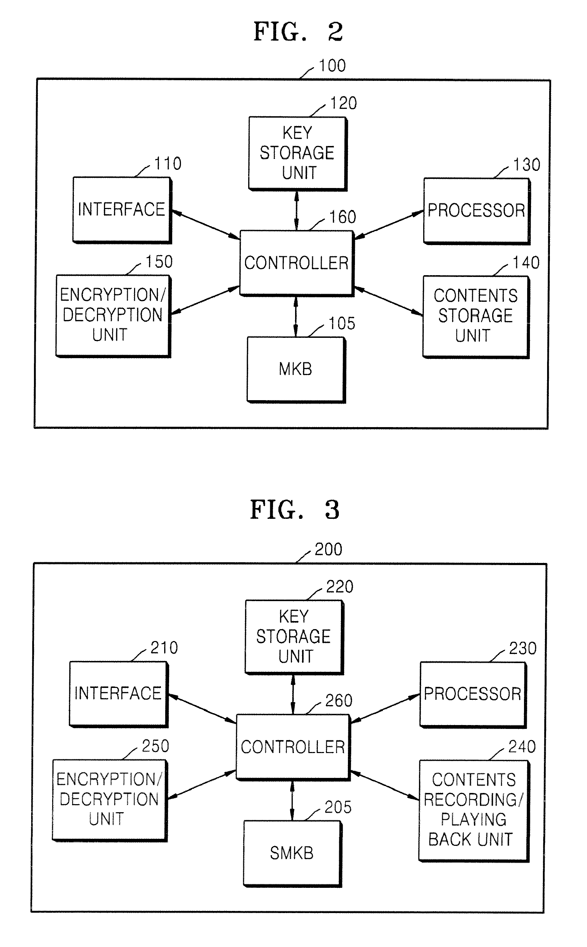

FIGS. 2 and 3 illustrate a mobile device00 and a host device 200, respectively, for implementing a system for mutual authentication between mobile and host devices.

FIG. 2 illustrates the configuration of a mobile device00 according to an exemplary embodiment of the present invention. In this case, the mobile device00 may include a portable memory card and store contents transmitted from the host device 200.

As illustrated in FIG. 2, the mobile device 100 includes a media key block (MKB) 105, an interface 110, a key storage unit 120, a processor 130, a contents storage unit 140, an encryption/decryption unit 150, and a controller 160.

Revocation information of a host device and update information of a storage key are recorded on the MKB 105.

When the mobile device 100 is in communication with the host device 200, the interface 110 exchanges contents with various keys using an authenticated key exchange (AKE) method.

The key storage unit 120 stores various secret keys, such as a storage key and a media unique key or the like, and a public key.

The processor 130 performs a storage media key processing process using a storage media key block (SMKB), that is received from the host device 200, and the stored storage key.

The contents storage unit 140 stores the contents that are received from the host device 200.

The encryption/decryption unit 150 encrypts or decrypts the transmitted data, which may include contents or a contents key.

The controller 160 manages the contents, manages a license indicating the usage rights of the contents, and updates the MKB 105.

FIG. 3 illustrates the configuration of the host device 200 according to an exemplary embodiment of the present invention. In this case, the host device 200 may include various DVDs and a kiosk or the like, for recording or playing back contents.

As illustrated in FIG. 3, the host device 200 includes an SMKB 205, an interface 210, a key storage unit 220, a processor 230, a contents recording/playing back unit 240, an encryption/decryption unit 250, and a controller 260.

The SMKB 205 may be the same as the MKB 105 of FIG. 2 and include data that is transmitted to the mobile device 100. The SMKB checks whether the mobile device 100 has been reproduced by an unauthorized manufacturer. The SMKB 205 is encrypted using a broadcast method.

When the host device 200 is in communication with the mobile device 100, the interface 210 exchanges contents with various keys using an AKE method.

The key storage unit 220 stores various secret keys, such as a storage key and a media unique key or the like, and a public key.

The processor 230 performs a media key processing process and a one way function operation using the MKB 105, that is received from the mobile device 100, and a stored device key.

The contents recording/playing back unit 240 receives contents from a contents manufacturer (CP) and records the contents or plays back the stored contents.

The encryption/decryption unit 250 encrypts or decrypts the transmitted data which may include contents or a contents key.

The controller 260 manages the contents, manages a license indicating the usage rights of the contents, and updates the SMKB 205.

In this case, unlike the related art, the host device 200 stores an SMKB 205 that is a data block for determining the validity of the mobile device 100, and the mobile device 100 stores a storage key that interprets the SMKB 205.

A method for mutual authentication between the mobile device 100, which stores the MKB 105, and the host device 200, which stores the SMKB 205, will now be descried.

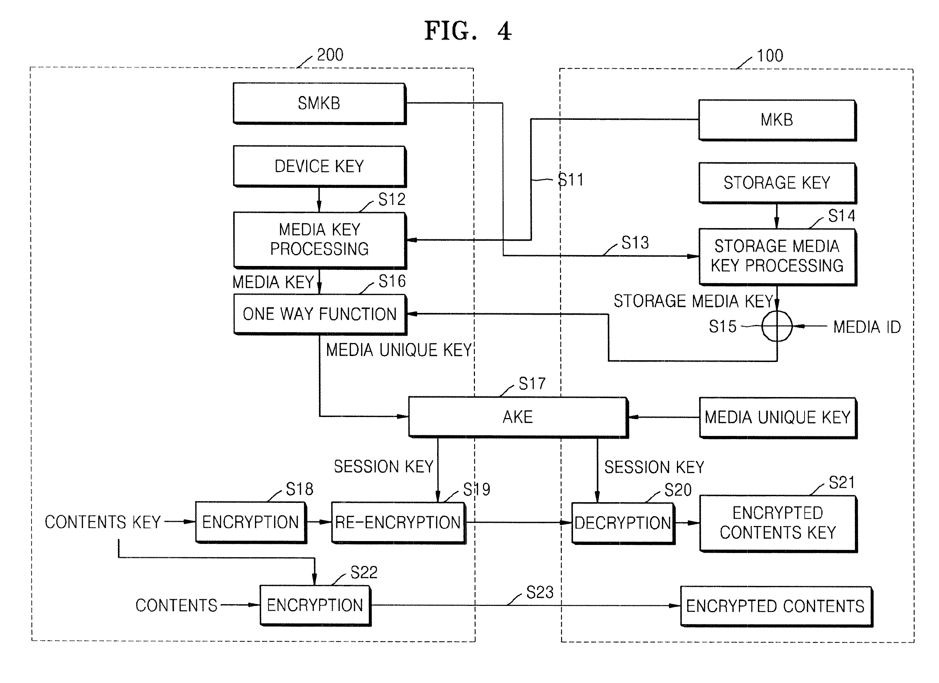

FIG. 4 illustrates a system for mutual authentication between mobile and host devices according to an exemplary embodiment of the present invention.

As illustrated in FIG. 4, a system for transmitting contents includes the mobile device 100, which stores the MKB 105 for managing revocation information of the host device 200, and the host device 200, which has a device key for interpreting the MKB 105.

The host device 200 illustrated in FIG. 4 is a device that records and stores contents.

In a method of transmitting the contents stored in the host device 200 to the mobile device 100, the mobile device 100 transmits the MKB 105 to the host device 200 (S11), as illustrated in FIG. 4.

The host device 200 that receives the MKB 105 generates a media key through a media key processing process (S12) using the stored device key.

When the host device 200 receives the MKB 105 from the mobile device 100 to generate a media key, the mobile device 100 generates a storage media key using the SMKB 205 received from the host device 200. That is, as illustrated in FIG. 4, the host device 200 transmits the SMKB 205 to the mobile device 100 (S13).

The mobile device 100 that receives the SMKB 205 generates a storage media key through a storage media key processing process (S14) using the stored storage key.

The mobile device 100 outputs the result of an operation (S15) on the storage media key using a media ID and an exclusive OR (XOR) as a one way function. In this case, the media ID is unique information of the mobile device 100, and although the mobile device 100 is reproduced according to bits, the same media ID is not generated.

The media key that is output from the host device 200 is also input as a one way function so as to generate a unique key through an operation (S16) of the one way function, as illustrated in Equation 1:

$$\text{Media Unique Key} = \text{One Way Function}$$

$$(\text{Media Key, Storage Media Key} \ \forall \ \text{Media ID}) \qquad (1)$$

When the media unique key is generated in the host device 200 in this way, using the media unique key generated in the host device 200 and the media unique key stored in the mobile device 100, the host device 200 and the mobile device 100 respectively generate a session key using an AKE method (S17).

The contents key stored in the host device 200 is encrypted using a media unique key (S18). The encrypted contents key is re-encrypted using a session key of the host device 200 (S19) and is transmitted to the mobile device 100. The mobile device 100 decrypts the contents key that is re-encrypted using the session key (S20) and generates and stores an encrypted contents key (S21).

The host device 200 encrypts the stored contents using the contents key (S22) and transmits the encrypted contents to the mobile device 100 (S23).

In addition, the contents are encrypted using a symmetrical key encryption algorithm method, and the encrypted contents may be stored in the host device 200 together with license-related information.

In this case, as a result of transmitting the updated SMKB that is stored in the host device 200, to the mobile device 100, when the mobile device 100 is a device that has been reproduced by an unauthorized manufacturer, a storage media key processing process fails due to unauthorized reproduction of the mobile device 100. However, when the mobile device 100 is an authenticated device, the storage media key processing process is successfully performed using the mobile device 100.

Thus, the CP stores a new SMKB in a DVD corresponding to a host device and sells the new SMKB, so that a mobile device that is reproduced by an unauthorized manufacturer cannot generate a storage media key from the new SMKB.

In this way, unlike the related art, the present invention applies a broadcast encryption method to both the mobile device 100 and the host device 200 to allow a two way revocation function.

In other words, similar to the related art, a host device that is reproduced by an unauthorized manufacturer may be revoked using the MKB of the mobile device 100, and according to the present exemplary embodiment of the present invention, when the mobile device 100 is reproduced by an unauthorized manufacturer, a storage media key cannot be generated through the storage media key processing process of the mobile device 100 using the SMKB of the host device 200, and thus, the mobile device 100 is revoked.

In this way, two way revocation of the mobile device 100 and the host device 200 that are reproduced by an unauthorized manufacturer or that are non-authenticated in an on/off line environment can be effectively performed.

The mobile device 100, to which the encrypted contents are transmitted, may decrypt and play back the received and encrypted contents key and the encrypted contents using another host device having a playback function.

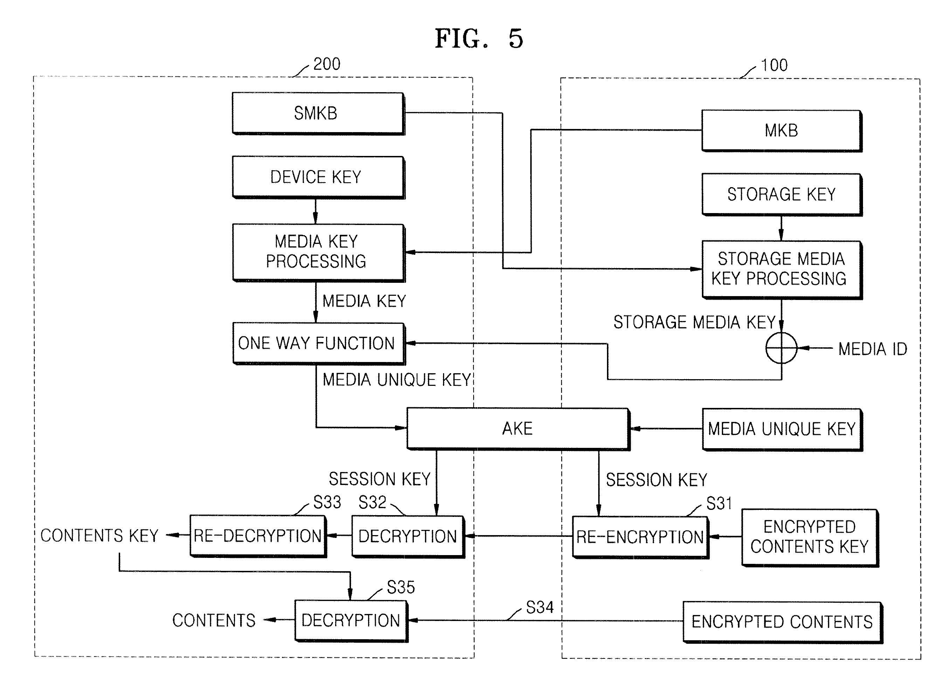

A method of playing back the encrypted contents will now be described with reference to FIG. 5.

FIG. 5 illustrates a system for mutual authentication between mobile and host devices according to another exemplary embodiment of the present invention.

As illustrated in FIG. 5, a contents transmission system includes a mobile device 100 and a host device 200, having a playback function.

In other words, the host device 200 illustrated in FIG. 5 is a device that functions as a player for playing back contents, unlike the host device 200 illustrated in FIG. 4.

The mobile device 100 and the host device 200 generate a session key through the same process as that of FIG. 4, and the process of generating a session key is the same as that of FIG. 4 and thus, a repeated description will be omitted.

After the mobile device 100 and the host device 200 generate a session key, the encrypted contents key that is stored in the mobile device 100 is re-encrypted using the session key (S31) and is transmitted to the host device 200. After the host device 200 decrypts the re-encrypted contents key using the session key (S32), the host device 200 re-decrypts the contents key using a media unique key (S33), and generates a contents key.

The host device 200 receives the encrypted contents from the mobile device 100 (S34), decrypts the encrypted contents using the generated contents key (S35), and plays back the contents.

In this way, according to the exemplary embodiments of the present invention illustrated in FIGS. 4 and 5, the mobile device and the host device each generate a session key using a safe AKE method based on a media unique key which is a common secret key.

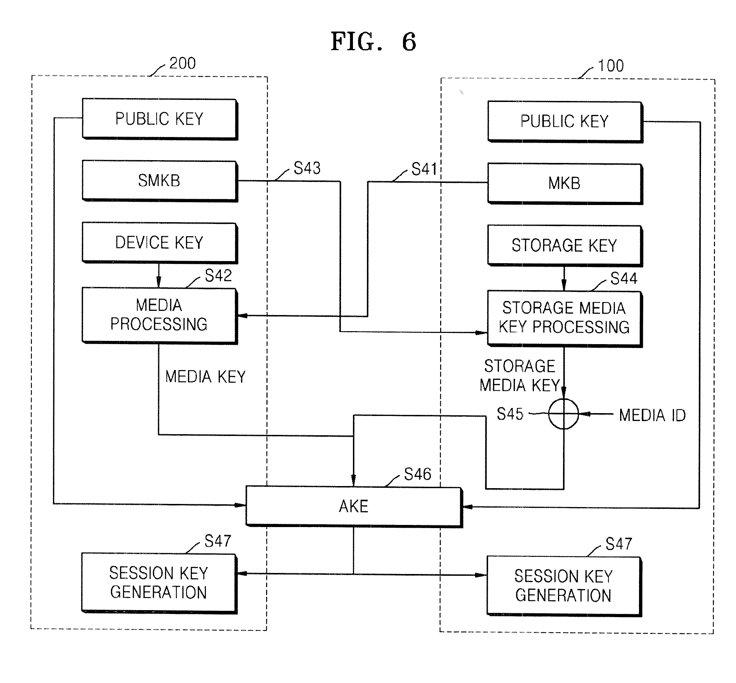

FIG. 6 illustrates a system for mutual authentication between mobile and host devices according to another exemplary embodiment of the present invention.

As illustrated in FIG. 6, a system for revoking a contents key includes a mobile device 100 and a host device 200, each having a contents recording function.

In this case, unlike FIGS. 4 and 5, the mobile device 100 and the host device 200 each have a public key, and the mobile device 100 and the host device 200 store a storage key and a device key, respectively, each corresponding to a private key.

A process of generating a session key will now be described. As illustrated in FIG. 6, the mobile device 100 transmits an MKB to the host device 200 (S41). The host device 200 that receives the MKB generates a media key through a media key processing process (S42) using the stored device key. While the mobile device 100 transmits the MKB and the host device 200 generates the media key, the mobile device 100 generates a storage media key using an SMKB that is received from the host device 200.

That is, as illustrated in FIG. 6, the host device 200 transmits the SMKB to the mobile device 100 (S43). The mobile device 100 that receives the SMKB generates a storage media key through the storage media key processing process (S44) using the stored storage key.

A result value E(Storage Media Key V Media ID) that is obtained by performing an operation on the storage media key using a media ID and XOR (S45) is generated.

At this time, the mobile device 100 and the host device 200 exchange their own public key authentication certificates and then, verify the authentication certificates using an electronic signature algorithm and a public key (S46).

The mobile device 100 encrypts the generated operation result value E(Storage Media Key V Media ID) using the public key of the host device 200 and transmits the encrypted result value to the host device 200. In addition, the host device 200 encrypts the generated media key using the public key of the mobile device 102 and transmits the encrypted media key to the mobile device 100.

In this way, a session key is generated using an AKE method using the public keys that are stored in the mobile device 102 and the host device 200(S47).

A process of encrypting/decrypting the contents to play back the contents has been already described with reference to FIGS. 4 and 5 and thus, a repeated description thereof will be omitted.

A CP traces a mobile device tat has been reproduced by an unauthorized manufacturer through contents using a conventional contents tracing technology to find a traitor which distributes a storage key.

In this case, according to the present exemplary embodiment of the present invention, when the CP finds a mobile device that has been reproduced by an unauthorized manufacturer, the CP updates the SMKB of the host device so that the mobile device that has been reproduced by an unauthorized manufacturer cannot perform the storage media processing process using the SMKB, thereby revoking the mobile device.

In other words, in the case of a host device of which on-line connection is possible, the CP updates the SMKB stored in the host device so that the mobile device for storing an illegally-copied or non-authenticated storage key cannot induce a storage media key, thereby revoking the mobile device.

In addition, when on-line connection of the host device is not possible, a new SMKB is inserted in a newly-issued mobile device so that the SMKB of the host device can be updated.

Thus, according to the exemplary embodiments of the present invention, the SMKB is updated and stored in the host device so that the mobile device for storing an illegally-copied storage key cannot generate a storage media key and the mobile device is revoked.

The exemplary embodiments of the present invention can be written as computer programs. Codes, and code segments for accomplishing the present invention can be easily construed by programmers skilled in the art to which the present invention pertains. In addition, the computer programs are stored in a computer readable recording medium, are read and executed by a computer, thereby implementing a method for mutual authentication between mobile and host devices. Examples of the computer readable recording medium include magnetic storage media, optical recording media, and other storage media.

As described above, in the method for mutual authentication between mobile and host devices according to the present invention, an SMKB is updated and stored in the host device so that a mobile device that has been reproduced by an unauthorized manufacturer cannot perform mutual authentication, and a two way revocation function between the mobile device and the host device can be performed.

While the present invention has been particularly shown and described with reference to exemplary embodiments thereof, it will be understood by those of ordinary skill in the art that various changes in form and details may be made therein without departing from the spirit and scope of the present invention as defined by the following claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An apparatus (100) comprising:

   a processor (130) which generates a second secret key using first data that is encrypted and received from a host device (200) and a first secret key;
   a media key block (MKB) (105) which stores second data that is encrypted and transmitted to the host device (200), so as to induce generation of a media key; and
   an interface (110) which transmits the encrypted second data to the host device (200), receives the encrypted first data from the host device (200), and performs mutual authentication with the host device (200).

2. The apparatus of claim 1, wherein the processor (130) generates an operation value by performing an operation on a stored media identifier and the second secret key, and transmits the operation value to the host device through the interface.

3. The apparatus of claim 2, further comprising:

   a key storage unit (120) which stores the first secret key;
   a contents storage unit (140) which stores encrypted contents; and
   an encryption or decryption unit (150) which encrypts or decrypts the contents or a contents key.

4. The apparatus of claim 3, wherein the key storage unit (120) further stores at least one of a first media unique key and a public key.

5. The apparatus of claim 4, wherein the interface (110) receives a second media unique key from the host device (200) and performs mutual authentication with the host device (200) by using the first media unique key and the second media unique key as common information.

6. The apparatus of claim 4, wherein the interface (110) performs mutual authentication with the host device (200) by exchanging the public key stored in the key storage unit and a public key stored in the host device.

7. The apparatus of claim 3, wherein the encryption or decryption unit (150) encrypts or decrypts the contents key using a session key that is generated through the mutual authentication.

8. The apparatus of any preceding claim, wherein the encrypted first and second data are encrypted using a broadcast encryption method.

9. A method for mutual authentication between an apparatus (100) and a host device (200), the method comprising:

   generating at the apparatus (100) a second secret key using a first secret key stored at the apparatus and first data that is received from the host device (200) and is encrypted;
   transmitting second data that is encrypted, from the apparatus (100) to the host device (200) to induce generation of a media key;
   performing at the apparatus (100) an operation on the second secret key to generate an operation value, and transmitting the operation value to the host device (200); and
   performing at the apparatus (100) mutual authentication with the host device (200).

10. The method of claim 9, wherein the performing the mutual authentication with the host device (200) comprises performing mutual authentication by using a first media unique key and a second media unique key as common information.

11. The method of claim 9, wherein the performing the mutual authentication with the host device (200) comprises performing mutual authentication by exchanging a public key stored in the apparatus (100) and a public key stored in the host device (200).

12. The method of claim 9, wherein the operation value is generated by performing an operation on the second secret key using a media identifier stored in the apparatus (100).

13. The method of claim 10, wherein the second media unique key is generated by inputting the media key and the operation value into a hash function.

14. The method of claim 9, further comprising encrypting or decrypting a contents key using a session key that is generated through mutual authentication.

15. The method of any of claims 9 to 14, wherein the encrypted first and second data are encrypted using a broadcast method.

16. A system comprising:

   an apparatus (100) which stores a first secret key and generates a second secret key using first data that is received and is encrypted and the first secret key, generates an operation value by performing an operation on the second secret key, and outputs the operation value; and
   a host device (200) which transmits the first data to the apparatus (100), receives second data that is encrypted from the apparatus (100) and generates a media key based on the second data.

17. The system of claim 16, wherein mutual authentication between the apparatus (100) and host device (200) is performed by using a first media unique key stored in the apparatus (100) and a second media unique key generated by the host device (200), as common information.

18. The system of claim 16, wherein mutual authentication between the apparatus (100) and host device (200) is performed by exchanging a public key stored in the apparatus (100) and a public key stored in the host device (200).

19. The system of claim 16, wherein the apparatus (100) generates the operation value by performing an operation on the second secret key using a stored media identifier.

**20.** The system of claim 17, wherein a second media unique key is generated by inputting the media key and the operation value to a hash function.

**21.** The system of claim 16, wherein the apparatus (100) encrypts or decrypts a contents key using a session key that is generated through mutual authentication between the apparatus (100) and host device (200).

**22.** The system of any of claims 16 to 21, wherein the encrypted first and second data are encrypted using a broadcast method.

**23.** A computer readable recording medium storing a program for executing the method of claim 9.

FIG. 1 (RELATED ART)

# FIG. 2

# FIG. 3

# FIG. 4

```
                          200                                              100

        ┌──────────────────────┐                         ┌──────────────────┐
        │         SMKB         │───────────┐             │       MKB        │
        └──────────────────────┘           │  ┌──────────└──────────────────┘
                                           │  │
        ┌──────────────────────┐           │  │          ┌──────────────────┐
        │      DEVICE KEY       │      S11  │  │          │   STORAGE KEY    │
        └──────────────────────┘           │  │          └──────────────────┘
                    │ S12                   │  │                    │ S14
        ┌──────────────────────┐           │  │          ┌──────────────────┐
        │      MEDIA KEY        │◄──────────┘  │   S13    │  STORAGE MEDIA   │
        │     PROCESSING        │             └─────────► │  KEY PROCESSING  │
        └──────────────────────┘                          └──────────────────┘
         MEDIA KEY │      S16                         STORAGE MEDIA KEY │
        ┌──────────────────────┐                              S15  ⊕ ◄── MEDIA ID
        │   ONE WAY FUNCTION    │◄─────────────────────────────────┘
        └──────────────────────┘
              MEDIA UNIQUE KEY │
                               │          S17
                        ┌──────────────────────────┐    ┌──────────────────┐
                        │           AKE            │◄───│ MEDIA UNIQUE KEY │
                        └──────────────────────────┘    └──────────────────┘
                  SESSION KEY │                SESSION KEY │
                S18  ┌──────────┐  S19  ┌──────────┐  S20 ┌──────────┐  S21 ┌──────────────┐
CONTENTS KEY ──────►│ENCRYPTION│─────►│RE-ENCRYPT.│─────►│DECRYPTION│─────►│  ENCRYPTED   │
                    └──────────┘       └──────────┘       └──────────┘      │ CONTENTS KEY │
          │                                                                 └──────────────┘
          │              S22
          │         ┌──────────┐                  S23          ┌──────────────────┐
CONTENTS ─┴────────►│ENCRYPTION│────────────────────────────►│ENCRYPTED CONTENTS│
                    └──────────┘                               └──────────────────┘
```

EP 1 975 841 A2

# FIG. 5

EP 1 975 841 A2

**FIG. 6**